# EUROPEAN PATENT APPLICATION

(11) **EP 4 597 705 A1**
(43) Date of publication of application: **06.08.2025**
(21) Application number: 24155494.8
(22) Date of filing: 02.02.2024
(51) Int. Cl.: H01M 50/213, H01M 50/249, H01M 50/503, H01M 50/505, H01M 50/512, H01M 50/516

(54) **A BATTERY CELL ARRANGEMENT**

(71) Applicant: VOLVO TRUCK CORPORATION, 405 08 Göteborg (SE)
(72) Inventor: PAWAR, Tejas, 418 70 GÖTEBORG (SE); THELIN, Tomas, 442 70 KÄRNA (SE)
(74) Representative: Kransell & Wennborg KB

(57) **Abstract**

A battery cell arrangement (110) comprising: a plurality of cylindrical battery cells (120, 122), a negative busbar plate (130) arranged supported on a top surfaces (122a) of the plurality of cylindrical battery cells (120, 122), and a positive busbar plate (140) arranged electrically isolated from, and supported on, the negative busbar plate (130), the positive busbar plate (140) comprising a plurality of positive busbar terminals (144, 144a), and the negative busbar plate (130) comprising a plurality of first openings (132, 132a), wherein the positive busbar plate (140) comprises a plurality of second openings (146, 146a) and wherein each one of the positive busbar terminals (144, 144a) is arranged in contact with a corresponding positive terminal (124) of the plurality of cylindrical battery cells (120, 122), and each one of the negative terminal (126) of the plurality of cylindrical battery cells (120, 122) is arranged in contact with the negative busbar plate (130) at associated second openings (146, 146a) of the positive busbar plate (140).

## Description

### TECHNICAL FIELD

The disclosure relates generally to batteries or battery packs. In particular aspects, the disclosure relates to a battery cell arrangement. The disclosure can be applied to heavy-duty vehicles, such as trucks, buses, and construction equipment, among other vehicle types including marine vessels. Although the disclosure may be described with respect to a particular vehicle, the disclosure is not restricted to any particular vehicle.

### BACKGROUND

A vehicle typically comprises an engine for propelling the vehicle. The engine may be powered by various means, such as e.g. by liquid or gaseous fuel in a combustion engine or an internal combustion engine. Alternatively, the vehicle may be propelled by electric power in an electric machine. Moreover, hybrid solutions exist in which the vehicle is propelled both by an internal combustion engine and an electric machine. In either way, an energy storage device is used to store the energy needed in order to propel the vehicle. Energy storage devices may further be used to power auxiliary loads in the vehicle.

For many vehicles, the energy storage devices are comprised in an energy storage system, wherein the energy storage system is configured to power the electric machine for propelling the vehicle, as well as any auxiliary load. For example, for an electric vehicle, the energy storage devices may be batteries or battery packs, which are configured to operate the electric machine as well as electrically driven auxiliary equipment. The electric machine and/or the electrically driven auxiliary equipment may be commonly referred to as a load. Several batteries, or several series-connected and/or parallel connected battery cells, may be grouped into the battery pack. The battery pack is periodically in need of charging, and is then electrically connected to an electrical energy source, e.g. via plug directly connected to the power grid, or by an on-board charger. Such chargers may commonly be referred to as a power source.

In many applications, a plurality of battery cells in the battery pack are electrically connected to each other by means of cell-to-cell busbar plates, typically a positive busbar plate and a negative busbar plate. However, these cell-to-cell busbar plates takes up a lot of space in the battery pack. Moreover, the electrical connections to and from the cell-to-cell busbar plates may be a challenge due to limited space requirements. There is thus a need in the industry for an improved battery cell arrangement.

### SUMMARY

According to a first aspect of the disclosure, a battery cell arrangement is provided. The battery cell arrangement comprises: a plurality of cylindrical battery cells, each one of the cylindrical battery cells having a top surface including a centrally arranged positive terminal and a negative terminal circumferentially arranged around the positive terminal; a negative busbar plate arranged supported on the top surfaces of the plurality of cylindrical battery cells, and a positive busbar plate arranged electrically isolated from, and supported on, the negative busbar plate, the positive busbar plate comprising a plurality of positive busbar terminals aligned with the positive terminals of the plurality of cylindrical battery cells, and the negative busbar plate comprising a plurality of first openings aligned with the plurality of positive busbar terminals; wherein the positive busbar plate comprises a plurality of second openings aligned with the negative terminals of the plurality of cylindrical battery cells, and wherein each one of the positive busbar terminals is arranged in contact with a corresponding positive terminal of the plurality of cylindrical battery cells, and each one of the negative terminal of the plurality of cylindrical battery cells is arranged in contact with the negative busbar plate at the associated second opening of the positive busbar plate. The first aspect of the disclosure may seek to overcome problems with inefficient and/or cumbersome cell-to-cell busbar arrangements. That is, by the first aspect, and in particular owing to the positive and negative busbar plates, arrangement of the plurality of cylindrical battery cells is improved. Moreover, by the arrangement of the cylindrical battery cells and the positive and negative busbar plates, assembly of the battery cell arrangement, routing to and from the battery cell arrangement and/or overall space requirements may be improved. That is, as both the positive and negative busbar plates are arranged in relation to the same side of the cylindrical battery cells, the assembly of the battery cell arrangement can be facilitated as connections can be arranged on one side of the cylindrical battery cells, routing can be facilitated for the same reasons, and/or the space requirements of the battery cell arrangement may be reduced. to and from the battery cell arrangement may be facilitated. A technical benefit may include improved design and/or management of the battery cell arrangement. Another technical benefit may include improved arrangement of the electrical connections between the positive and negative terminals of the cylindrical battery cells and the corresponding positive and negative busbar plates. Thus, the first aspect may provide an improved battery cell arrangement owing to the arrangement of the positive busbar terminals and second opening of the positive busbar plate. It should be understood that each one of the negative terminal of the plurality of cylindrical battery cells is arranged in electrical contact with the negative busbar plate at the associated second opening of the positive busbar plate, and that this electrical contact may be achieved by direct contact between the negative busbar plate and the corresponding negative terminal of the plurality of cylindrical battery cells. Thus, the negative busbar plate may here be directly connected to the corresponding negative terminal of the plurality of cylindrical battery cells. The electrical contact may be achieved by a weld (e.g. by laser welding). Correspondingly, each one of the positive busbar terminals is arranged in electrical contact with the corresponding positive terminal of the plurality of cylindrical battery cells, and this electrical contact may be achieved by direct contact between the positive busbar terminals and the corresponding positive terminal of the plurality of cylindrical battery cells. Thus, the positive busbar terminals may here be directly connected to the corresponding positive terminal of the plurality of cylindrical battery cells. The electrical contact may be achieved by a weld (e.g. by laser welding). The negative busbar plate and the positive busbar plate may be referred to as cell-to-cell busbar plates. The battery cell arrangement may e.g. be configured for a vehicle.

Optionally in some examples, including in at least one preferred example, the positive busbar plate is laminated and/or the negative busbar plate is laminated. Thus, the positive busbar plate and/or the negative busbar plate may be laminated with an electrically isolating material except for at the corresponding openings and terminals. The material of the negative and positive busbar plates (i.e. inside of the lamination) is typically copper or aluminum.

Optionally in some examples, including in at least one preferred example, the positive and negative terminals for each one of the plurality of cylindrical battery cells are separated by a gap, or by a non-conducting part of the cylindrical battery cell. The gap may e.g. extend in the radial direction between the positive terminal and the negative terminal of each one of the plurality of cylindrical battery cells.

Optionally in some examples, including in at least one preferred example, each one of the positive busbar terminal of the positive busbar plate is formed like an impression in the positive busbar plate. A technical benefit may include improved arrangement of the electrical connection between the positive busbar plate and the positive terminals of the plurality of cylindrical battery cells. For example, owing to the impressions, the positive busbar plate, which is arranged supported on the negative busbar plate, can be electrically connected to the positive terminals of the plurality of cylindrical battery cells.

Optionally in some examples, including in at least one preferred example, each one of the impressions is extending into the corresponding first opening of the negative busbar plate. A technical benefit may include improved arrangement of the electrical connection between the positive busbar plate and the positive terminals of the plurality of cylindrical battery cells. For example, the impressions extends in the axial direction at a distance at least of the axial extension of the negative busbar plate (typically referred to as the thickness of the negative busbar plate). Thus, the impressions may extend from a first axial position at the positive busbar plate, axially towards and brough into contact with, the positive terminals of the plurality of cylindrical battery cells at a second axial position different to the first axial position. The impressions typically extend through their associated first openings of the negative busbar plate.

Optionally in some examples, including in at least one preferred example, each one of the impressions is forming a bridge between opposite sides of the corresponding positive busbar terminal. A technical benefit may include an advantageous structure for bringing the positive busbar plate into electrical contact with the positive terminals of the plurality of cylindrical battery cells. For example, owing to the bridge-shape, the electrical connection between the impressions and the positive terminals of the plurality of cylindrical battery cells can easily be achieved, e.g. by welding.

Optionally in some examples, including in at least one preferred example, the formed bridge of each impression comprises a lateral side adjacent a void. By the void, and owing to the bridge-shape, the impressions may easily be bent, or pressed, towards the positive terminals of the plurality of cylindrical battery cells. Hereby, the electrical connections between the impressions and the positive terminals of the plurality of cylindrical battery cells can be more easily achieved.

Optionally in some examples, including in at least one preferred example, the negative busbar plate is supported on the negative terminal of the cylindrical battery cells. A technical benefit may include a reliable support for the negative busbar plate. Moreover, the electrical connections between the negative busbar plate and the negative terminals of the plurality of cylindrical battery cells are facilitated, as they may be brought into electrical connections by welding or the like via the second openings of the positive busbar plate.

Optionally in some examples, including in at least one preferred example, each one of the second openings in the positive busbar plate is formed as an annulus sector. A technical benefit may include an improved electrical connection with the negative terminal of the plurality of cylindrical battery cells. That is, as the negative terminal is arranged circumferentially around the positive terminal for each one of the plurality of cylindrical battery cells, the negative terminal may be shaped as an annulus, and by providing the second openings in the positive busbar plate as an annulus sector, the alignment of the second openings and the negative terminals of the plurality of cylindrical battery cells is improved. The annulus sectors of the second openings may be referred to as annulus segments.

Optionally in some examples, including in at least one preferred example, the annulus sector of each second opening is defined by an angle of between 30° and 180°. A technical benefit may include a sufficient, but not exaggerated, opening for providing the electrical connection between the negative busbar plate and the negative terminal of the plurality of cylindrical battery cells.

Optionally in some examples, including in at least one preferred example, the plurality of cylindrical battery cells are electrically connected in parallel via the negative busbar plate and the positive busbar plate. A technical benefit may include an improved arrangement of parallelly arranged cylindrical battery cells. The parallelly arranged cylindrical battery cells share the negative and positive busbar plates on a common side. For example, the plurality of cylindrical battery cells make up a predetermined number of cylindrical battery cells and form a "logical cell arrangement". Then several such "logical cell arrangement" may be connected in series inside a battery pack comprising the battery cell arrangement.

Optionally in some examples, including in at least one preferred example, the plurality of cylindrical battery cells is a first set of cylindrical battery cells, the negative busbar plate is a first negative busbar plate and the positive busbar plate is a first positive busbar plate, wherein the battery cell arrangement comprises a second set of cylindrical battery cells, each one of the cylindrical battery cells in the second set having a top surface including a centrally arranged positive terminal and a negative terminal circumferentially arranged around the positive terminal, a second negative busbar plate arranged supported on the top surface of the second set of cylindrical battery cells, and a second positive busbar plate arranged electrically isolated from, and supported on, the second negative busbar plate, and wherein the first positive busbar plate comprises a first lateral coupling side and the second positive busbar plate comprises a second lateral coupling side arranged to couple to the first lateral coupling side such that the first and second positive busbar plates are arranged side-by-side. A technical benefit may include an improved arrangement of the plurality of cylindrical battery cells. That is, the first set of cylindrical battery cells may be arranged in an advantageous manner relative to the second set of cylindrical battery cells, with the previously mentioned improvement related to assembly of the battery cell arrangement, routing to and from the battery cell arrangement and/or overall space requirements.

Optionally in some examples, including in at least one preferred example, the second positive busbar plate is electrically connected to the first negative busbar plate such that the first set of cylindrical battery cells is electrically connected in series with the second set of cylindrical battery cells. A technical benefit may include an improved electrical connection and arrangement of the plurality of cylindrical battery cells. Thus, the first set of cylindrical battery cells may be electrically connected in series with the second set of cylindrical battery cells. Hereby, the battery cell arrangement can be expanded. For example, the voltage of the battery cell arrangement may be adapted. For example, as previously described, the cylindrical battery cells may be grouped into "logical cell arrangements". Thus, a first "logical cell arrangement" may be formed by parallel connections between the cylindrical battery cells in the first set of cylindrical battery cells, and a second "logical cell arrangement" may be formed by parallel connections between the cylindrical battery cells in the second set of cylindrical battery cells. Thereafter, the first and second "logical cell arrangements" can be connected in series as previously described. Depending on the need, more than two of such corresponding "logical cell arrangement" may be connected in series and e.g. make up the battery cells of a battery pack. Hereby, the voltage of the battery cell arrangement may be adapted based on the need. Thus, a modular battery cell arrangement can be achieved. That is, and in some examples, including in at least one preferred example, the operating voltage of the battery cell arrangement is scalable by the number of sets of cylindrical battery cells. A technical benefit may include an efficient way to adapt the operating voltage of the battery cell arrangement. That is, the battery cell arrangement may comprise plurality of sets of cylindrical battery cells, wherein each set is arranged in a corresponding manner as the first and second sets of cylindrical battery cells as described above (i.e. with corresponding arrangement of a corresponding negative and positive busbar plates). For example, the battery cell arrangement may comprise a plurality of sub-portions, wherein each sub-portion comprises plurality of cylindrical battery cells arranged in a predetermined set by a corresponding negative and positive busbar plates as previously described, wherein each one of the sub-portions comprises corresponding first and second lateral coupling sides arranged opposite each other, such that the sub-portions can be electrically connected by the first coupling side of a first sub-portion to a corresponding second coupling side of a second sub-portion as previously described.

Optionally in some examples, including in at least one preferred example, the second positive busbar plate comprises a plurality of interconnections arranged in the second lateral coupling side for electrically connecting the first negative busbar plate with the second positive busbar plate. A technical benefit may include a simple yet effective structure for electrically connecting the first set of cylindrical battery cells with the second set of cylindrical battery cells. By providing a plurality of interconnections that electrically connect the second positive busbar plate with the first negative busbar plate, a more reliable electrical connection is provided. The interconnections may e.g. be interconnecting welds.

Optionally in some examples, including in at least one preferred example, the first lateral coupling side of the first positive busbar plate comprises a plurality of indentations, and the second lateral coupling side of the second positive busbar plate comprises a plurality of protrusions sized and dimensioned to match the indentations. A technical benefit may include a reliant structure for mating the first lateral coupling side with the second lateral coupling side. Moreover, the plurality of indentation and plurality of protrusions provide a space-efficient structure for the first and second lateral coupling sides.

Optionally in some examples, including in at least one preferred example, the second lateral coupling side of the second positive busbar plate comprises a plurality of second interconnecting sections arranged in between the plurality of protrusions, wherein the second interconnecting sections comprises the interconnections. A technical benefit may include an improved electrical connection between the second positive busbar plate and the first negative busbar plate. For example, owing to the reliant mating structure between the first and second lateral coupling sides (due to the plurality of indentation protrusions), the electrical connection between the second positive busbar plate and the first negative busbar plate by the interconnections (being arranged in between the plurality of protrusions) can be made more reliable. The second interconnecting sections may be straight connections, as compared to the plurality of protrusions between which they are arranged.

Optionally in some examples, including in at least one preferred example, the first lateral coupling side of the first positive busbar plate comprises a plurality of first interconnecting sections arranged in between the plurality of indentations, wherein the first negative busbar plate is overlapping the second positive busbar plate at the first interconnecting sections. A technical benefit may include a reliant structure for mating the first lateral coupling side with the second lateral coupling side. Moreover, the overlapping structure provide a space-efficient structure for the first and second lateral coupling sides.

Optionally in some examples, including in at least one preferred example, each one of the protrusions of the second lateral coupling side is arranged adjacent a corresponding positive busbar terminal of the second positive busbar plate. A technical benefit may include a space-efficient structure. For example, the positive busbar terminals of the second positive busbar plate may be arranged to extend at least partly into the associated protrusion.

Optionally in some examples, including in at least one preferred example, the plurality of cylindrical battery cells extends axially from a bottom surface to the top surface, wherein the plurality of first openings are axially aligned with the plurality of positive busbar terminals, and wherein plurality of second openings are axially aligned with the negative terminals of the plurality of cylindrical battery cells. A technical benefit may include an improved arrangement of the plurality of cylindrical battery cells with regards to the positive busbar plate and the negative busbar plate. The plurality of cylindrical battery cells comprises positive and negative terminals facing in the same direction, i.e. that of the negative and positive busbar plates. Thus, the axial direction of the battery cell arrangement may be defined by the axial direction of the cylindrical battery cells. In other words, the negative busbar plate may be described as being arranged on top of the top surfaces of the plurality of cylindrical battery cells, and the positive busbar plate may be described as being arranged on top of the negative busbar plate, with regards to the axial direction. For example, the axial direction of the battery cell arrangement may be aligned with the direction of the force of gravity.

Optionally in some examples, including in at least one preferred example, the battery cell arrangement may be defined in a cartesian coordinate system using xyz-axes, wherein the axial direction is extending along the z-axis, and wherein the plates of the negative busbar plate and the positive busbar plate are extending in the xy-plane.

Optionally in some examples, including in at least one preferred example, the plurality of cylindrical battery cells is arranged in a matrix of rows and columns. A technical benefit may include an improved arrangement of the plurality of cylindrical battery cells. For example, the matrix may provide a space-efficient arrangement of the plurality of cylindrical battery cells.

According to a second aspect of the disclosure, a vehicle comprising battery cell arrangement of the first aspect of the disclosure is provided. The second aspect of the disclosure may seek to solve the same problem as described for the first aspect of the disclosure. Thus, effects and features of the second aspect of the disclosure are largely analogous to those described above in connection with the first aspect of the disclosure.

Optionally in some examples, including in at least one preferred example, the vehicle further comprises an electric traction machine for propelling the vehicle, the electric traction machine being powered by the battery cell arrangement.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

**FIG. 1** is an exemplary, partly schematic, side view of an electric vehicle comprising an electric machine for propelling the vehicle and a battery pack arrangement for powering the electric machine according to one example.
**FIG. 2** is an exemplary exploded perspective view of a battery cell arrangement according to one example.
**FIG. 3** is a perspective view of an exemplary battery cell of the battery cell arrangement according to one example.
**FIG. 4** is an exemplary top view of a battery cell arrangement according to one example.
**FIG. 5** is an exemplary perspective and partly cross-sectional view of a detail of a battery cell arrangement according to one example.
**FIG. 6** is an exemplary perspective view of a detail of a battery cell arrangement according to one example.

### DETAILED DESCRIPTION

The detailed description set forth below provides information and examples of the disclosed technology with sufficient detail to enable those skilled in the art to practice the disclosure.

The disclosed technology may solve the problem relating to inefficient and/or cumbersome cell-to-cell busbar arrangements. The disclosed technology comprises a specific arrangement of positive and negative busbar plates, and corresponding arrangement of a plurality of cylindrical battery cells with regards to the positive and negative busbar plates. By the arrangement of the cylindrical battery cells and the positive and negative busbar plates, assembly of the battery cell arrangement, routing to and from the battery cell arrangement and/or overall space requirements may be improved. A technical benefit may include improved design and/or management of the battery cell arrangement. Another technical benefit may include improved arrangement of the electrical connections between the positive and negative terminals of the cylindrical battery cells and the corresponding positive and negative busbar plates.

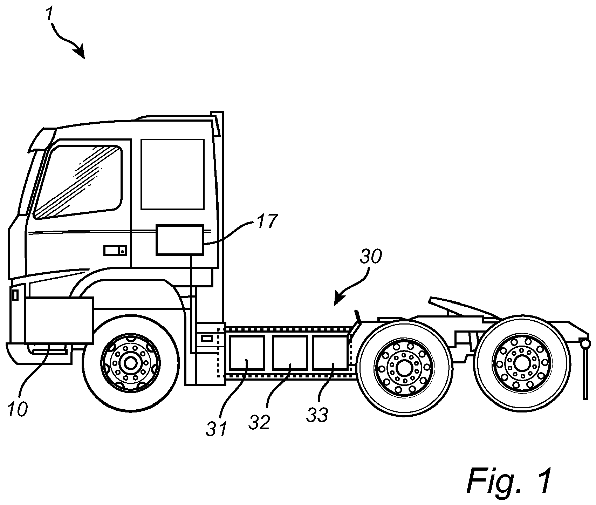

**FIG. 1** shows a vehicle 1 in the form of an exemplary heavy-duty truck. The vehicle 1 is an electric vehicle, such as a full electric vehicle or a hybrid, comprising at least one electric machine 10 (as an electric traction machine) powered by a battery pack arrangement 30, wherein in the example of Fig. 1, the battery pack arrangement 30 comprises three parallelly connected battery packs 31, 41, 51. However, it should be noted that fewer or more battery packs may be included in the battery pack arrangement 30, e.g. a single battery pack, two battery packs or more than three battery packs.

The battery packs 31, 41, 51 are configured to power at least one load, such as the electric machine 10. Moreover, the vehicle 1 comprises a control unit 17 arranged and configured for controlling at least parts of the operation of the battery pack arrangement 30, such as e.g. the operation of contactors of the battery pack arrangement 30. The vehicle 1 typically further comprises other parts of the powertrain such as transmission, drive shafts and wheels (not shown in detail). The electric machine 10 may be operated as an electric motor consuming electricity provided by the battery packs 31, 41, 51, e.g. to provide propulsion power, and may be operated as a generator to generate electricity to charge the battery packs 31, 41, 51.

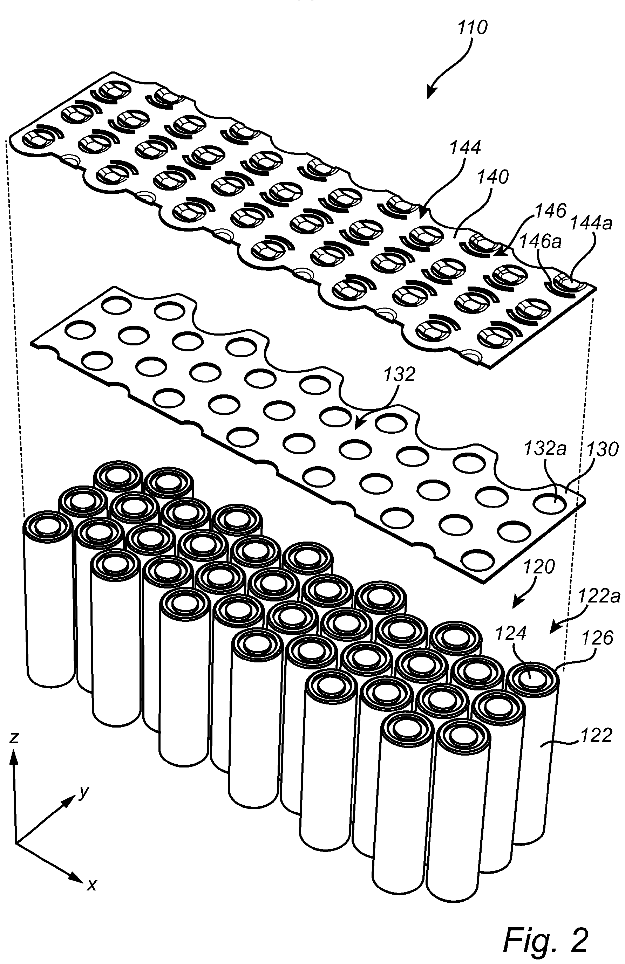

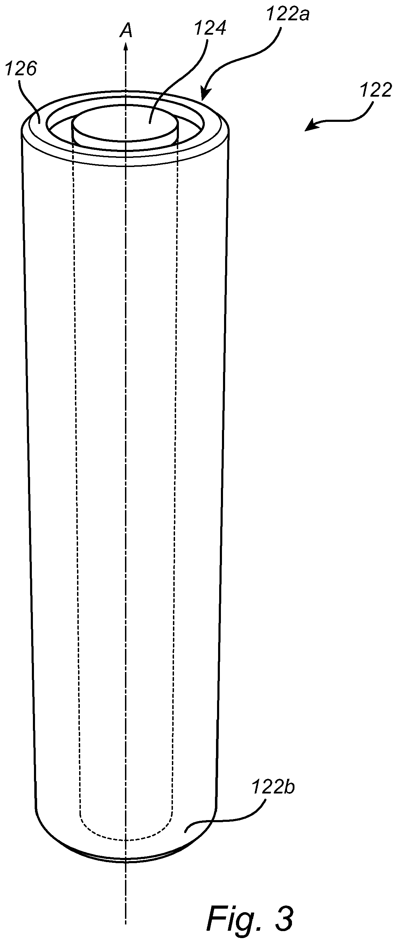

In **FIG. 2****,** a battery cell arrangement 110 comprising a plurality of cylindrical battery cells 120 is shown in an exploded view, and in **FIG. 3** one cylindrical battery cell 122 of the plurality of cylindrical battery cells 120 is shown in a perspective view. The battery cell arrangement 110 is typically included in a battery pack, such as one of the battery packs 31, 41, 51 of the battery pack arrangement 30 of Fig. 1. Typically, each one of the plurality of cylindrical battery cells 120 is corresponding in structure and function to the cylindrical battery cell 122 shown in Fig. 3, why references to features of the plurality of cylindrical battery cells 120 is the same as references to features of the cylindrical battery cell 122 in Fig. 3 in the following. The cylindrical battery cell 122 of Fig. 3 comprises a first surface, or bottom surface, 122b and a second surface, or top surface, 122a separated along a center axis A. Moreover, the cylindrical battery cell 122 comprises a centrally arranged positive terminal 124 and a negative terminal 126 circumferentially arranged around the positive terminal 124. Thus, the negative terminal 126 is arranged radially outside of the positive terminal 124.

The battery cell arrangement 110 comprises a negative busbar plate 130 and a positive busbar plate 140 to which the plurality of battery cells 120 is electrically connected. The battery cell arrangement 110 is in Fig. 2 defined by a cartesian coordinate system using xyz-axes, wherein the axial direction is extending along the z-axis, and wherein the plates of the negative busbar plate and the positive busbar plate are extending in the xy-plane. Thus, the axial direction along the center axis A of the plurality of cylindrical battery cells 120 is extending along the z-axis. The z-axis is typically arranged parallel with the direction of the force of gravity.

Each one of the plurality of cylindrical battery cells 120 of the battery cell arrangement 110 comprises a corresponding top surface 122a including the centrally arranged positive terminal 124 and the negative terminal 126 arranged circumferentially around the positive terminal 124. Moreover, the negative busbar plate 130 is arranged supported on the top surfaces 122a of the plurality of cylindrical battery cells 120. Thus, with reference to the xyz-axes, the negative busbar plate 130 is arranged above, and on top of, the plurality of cylindrical battery cells 120. The positive busbar plate 140 is arranged electrically isolated from, and supported on, the negative busbar plate 130. Thus, with reference to the xyz-axes, the positive busbar plate 140 is arranged above, and on top of, the negative busbar plate 130.

The positive busbar plate 140 comprises a plurality of positive busbar terminals 144 aligned, or axially aligned, with the positive terminals 124 of the plurality of cylindrical battery cells 120. Moreover, the negative busbar plate 130 comprises a plurality of first openings 132 aligned, or axially aligned, with the plurality of positive busbar terminals 144. Moreover, the positive busbar plate 140 comprises a plurality of second openings 146 aligned, or axially aligned, with the negative terminals 126 of the plurality of cylindrical battery cells 120. Hereby, each one of the positive busbar terminals 144 may be arranged in contact, or electrical contact, with a corresponding positive terminal 124 of the plurality of cylindrical battery cells 120, and each one of the negative terminals 126 of the plurality of cylindrical battery cells 120 may be arranged in contact, or electrical contact, with the negative busbar plate 130 at the associated second opening 146 of the positive busbar plate 140. Hereby, the plurality of cylindrical battery cells 120 may be electrically connected in parallel via the negative busbar terminal 130 and the positive busbar terminal 140.

For example, as shown in Fig. 2, a first positive busbar terminal 144a is axially aligned with the positive terminal 124 of a first cylindrical battery cell 122, and a first one 132a of the first openings 132 of the negative busbar plate 130 is axially aligned with the first positive busbar terminal 144a. Correspondingly, a first one 146a of the second opening 146 is axially aligned with the negative terminal 126 of the first cylindrical battery cell 122. Hereby the first positive busbar terminal 144a may be arranged in electrical contact with the positive terminal 124 of the first cylindrical battery cell 122, and the negative terminal 126 of the first cylindrical battery cell 122 may be arranged in electrical contact with the negative busbar plate 130 at the first one 146a of the second openings 146 of the positive busbar plate 140.

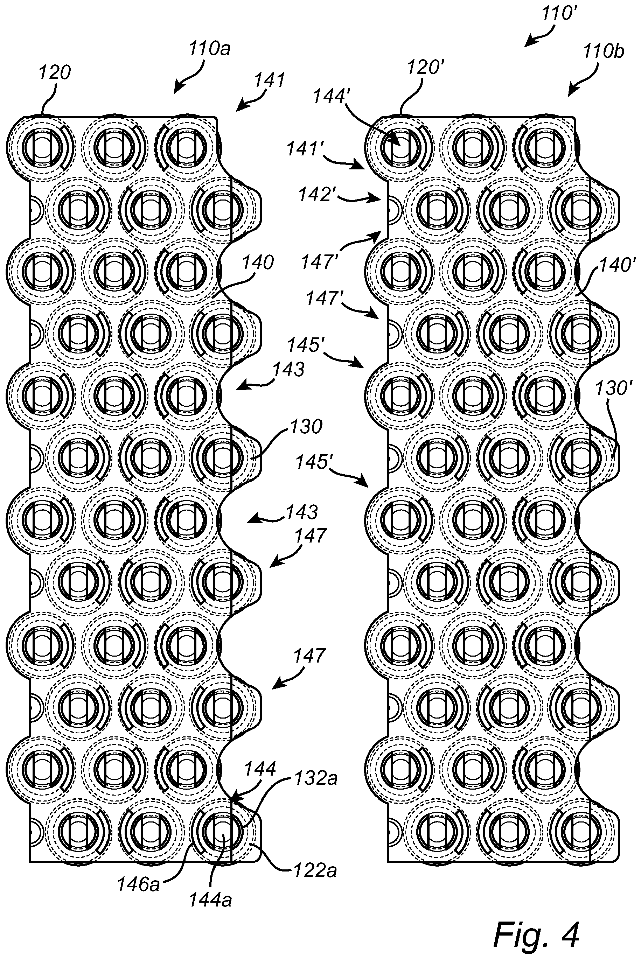

The resulting arrangement of the plurality of cylindrical battery cells 120, the negative bus bar plate 130 and the negative busbar plate 140 is shown in the left part of **FIG. 4****,** wherein the battery cell arrangement 110 of Fig. 2 is shown as a first sub-portion 110a of a battery cell arrangement 110'. Here, it is clear that the plurality of cylindrical battery cells 120 is arranged in a matrix of rows and columns. Here, the rows and columns are formed by 36 parallelly connected cylindrical battery cells 120.

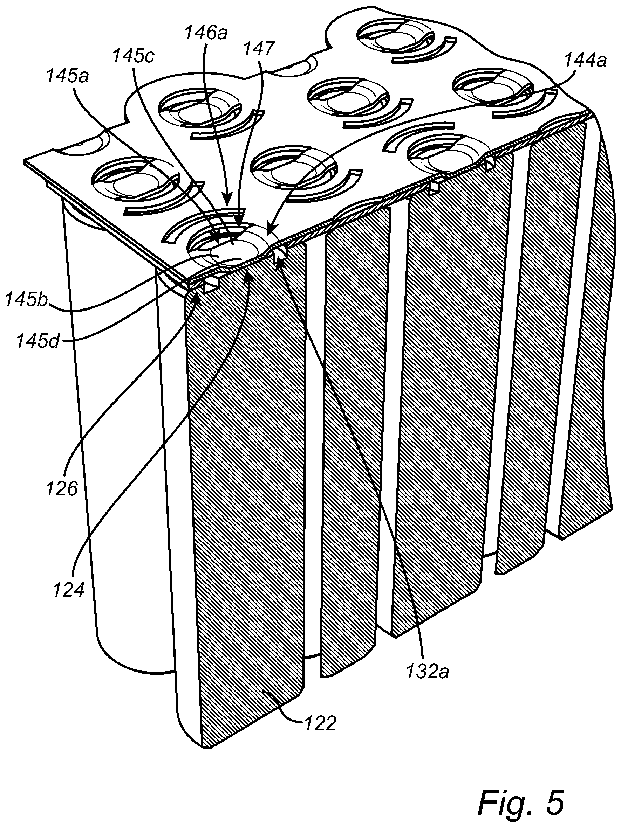

Turning to **FIG. 5****,** a detailed perspective and partly cross-sectional view of the first cylindrical battery cell 122 and corresponding parts of the negative and positive busbar plates 130, 140 is shown. Here, the first positive busbar terminal 144a is formed like an impression 145a in the positive busbar plate 140. The impression 145a is extending into the first one 132a of the first openings 132 of the negative busbar plate 130. As seen in Fig. 5, the impressions 145a extends in the axial direction, through the first one 132a of the first openings 132, down to the positive terminal 124 of the first cylindrical battery cell 122. Hereby, the impression 145 may be brought into electrical contact with the positive terminal 124 of the first cylindrical battery cell 122. A shown in Fig. 5, the impression 145a is in direct contact with the positive terminal 124 of the first cylindrical battery cell 122, which may be achieved e.g. by welding.

The impression 145a is formed as a bridge 145b arranged to extend from a first side of the first positive busbar terminal 145a to a second, opposite, side of the first positive busbar terminal 145a. Moreover, the bridge 145b is formed by two parallel lateral sides 145c, 145d of the impression 145a. One, or both, of the lateral sides 145c, 145d are adjacent a void 147. By the void 147 (or voids, incase both lateral sides 145c, 145d are adjacent a void), and owing to the bridge-shape, the impression 145a may easily be bent, or pressed, towards the positive terminal 124 of the first cylindrical battery cell 122. It should be noted that each one of the positive busbar terminals 144 of the positive busbar plate 140 is typically formed like the first positive busbar terminal 144a with a corresponding impression.

As also shown in Fig. 5, the negative busbar plate 130 is supported on the negative terminal 126 of the first cylindrical battery cell 122. As also shown, the first one 146a of the second openings 146 is formed as an annulus sector in the positive busbar plate 140. Hereby, and as the negative terminal 126 of the first cylindrical battery cell 122 is arranged circumferentially around the positive terminal 124, the alignment of the first one 146a of the second openings 146 and the negative terminal 124 of the first cylindrical battery cell 122 is facilitated. The annulus sector of the first one 146a of the second openings 146 may be defined by its angle of approximately 45°. That is, the annulus sector extends along at approximately 45° of an circular axis following the shape of the annulus section. It should be noted that each one of the second openings 146 of the positive busbar plate 140 is typically formed like the first one 146a of the second openings 146 with a corresponding annulus sector.

Turning back to Fig. 4, showing a top view of a battery cell arrangement 110' comprising two sub-portions, i.e. the previously described first sub-portion 110a comprising the battery cell arrangement 110 described with reference to Figs. 2-3, and a second sub-portion 1 10b, the second sub-portion 110b being arranged in a corresponding manner as the first sub-portion 1 10a. In more detail, the previously described plurality of cylindrical battery cells 120 is referred to as first set of cylindrical battery cells 120, the negative busbar plate 130 as a first negative busbar plate 130 and the positive busbar plate 140 as a first positive busbar plate 140. The second sub-portion 110b comprises a second set of cylindrical battery cells 120', each one of the cylindrical battery cells in the second set 122' is corresponding in structure and function to the cylindrical battery cell 122 shown in Fig. 3, why references to features of the plurality of cylindrical battery cells 120 is the same as references to features of the cylindrical battery cell 122 in Fig. 3 in the following. Thus, each one of the cylindrical battery cells of the second set 122' is having a top surface 122a including a centrally arranged positive terminal 124 and a negative terminal 126 circumferentially arranged around the positive terminal 124. The second sub-portion 110b of the battery cell arrangement 110' comprises a second negative busbar plate 130' arranged supported on the top surface 122a of the second set of cylindrical battery cells 120', and a second positive busbar plate 140' arranged electrically isolated from, and supported on, the second negative busbar plate 130'. Thus, the second negative busbar plate 130' may have a structure and function corresponding to the first negative busbar plate 130, and the second positive busbar plate 140' may have a structure and function corresponding to the first positive busbar plate 140.

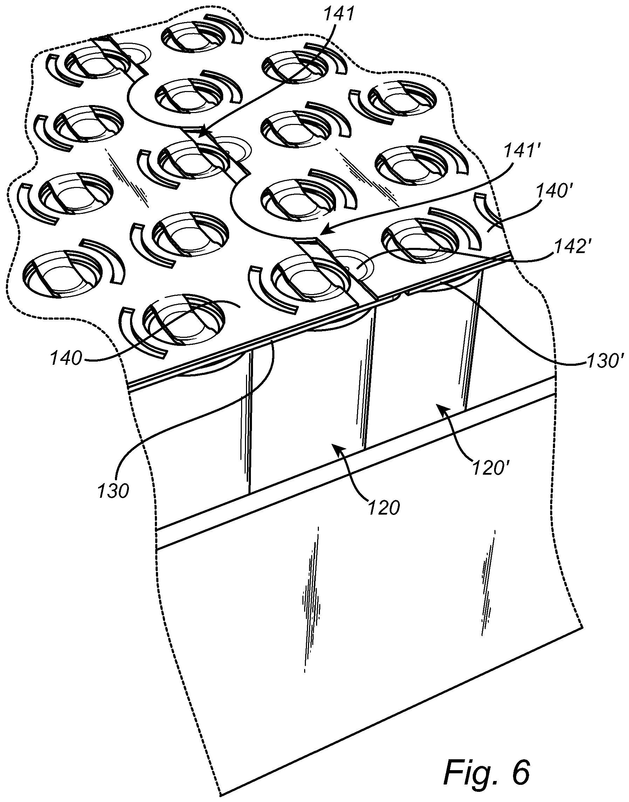

As shown in Fig. 4, and the detailed perspective detailed view of FIG. 6, the first positive busbar plate 140 comprises a first lateral coupling side 141 and the second positive busbar plate 140' comprises a second lateral coupling side 141' arranged to couple to the first lateral coupling side 141 such that the first and second positive busbar plates 140, 140' are arranged side-by-side. Hereby, the second positive busbar plate 140' may be electrically connected to the first negative busbar plate 130 such that the first set 120 of cylindrical battery cells is electrically connected in series with the second set 120' of cylindrical battery cells. In the example of Fig. 4, the second positive busbar plate 140' comprises a plurality of interconnections 142' arranged in the second lateral coupling side 141' for electrically connecting the first negative busbar plate 130 with the second positive busbar plate 140'. The interconnections 142' may e.g. be interconnecting welds.

As also shown in Fig. 4, the first lateral coupling side 141 of the first positive busbar plate 140 comprises a plurality of indentations 143, and the second lateral coupling side 141' of the second positive busbar plate 140' comprises a plurality of protrusions 145' sized and dimensioned to match the indentations 143. Hereby, the first positive busbar plate 140 and the second positive busbar plate 140' may be arranged to physically mate to each other, and the first sub-portion 110a may be coupled to the second sub-portion 110b, as shown in Fig. 6.

The second lateral coupling side 141' of the second positive busbar plate 140' comprises in the example of Fig. 4 a plurality of second interconnecting sections 147' arranged in between the plurality of protrusions 145', wherein the second interconnecting sections 147' comprises the interconnections 142'. Thus, when mating the first positive busbar plate 140 and the second positive busbar plate 140' as previously described, the interconnections 142' are automatically arranged in the correct position. Hereby, a reliable physical and electrical connection between the first and second sub-portions 110a, 110b of the battery cell arrangement 110' is provided. Moreover, the first lateral coupling side 141 of the first positive busbar plate 140 may comprise a plurality of first interconnecting sections 147 arranged in between the plurality of indentations 143, wherein the first negative busbar plate 130 is overlapping the second positive busbar plate 140' at the first interconnecting sections 147. That is, when the first positive busbar plate 140 and the second positive busbar plate 140' are mated, the first negative busbar plate 130 is overlapping the second positive busbar plate 140' at the first interconnecting sections 147, further improving the integrated structure between the first and second sub-portions 1 10a, 110b of the battery cell arrangement 110'. As shown in Fig. 4, each one of the protrusions 145' of the second lateral coupling side 141' is arranged adjacent a corresponding positive busbar terminal 144' of the second positive busbar plate 140'. Moreover, each one of first interconnecting sections 147 of the first lateral coupling side 141 is arranged adjacent a corresponding positive busbar terminal 144 of the first positive busbar plate 140.

It should be noted that all of the cylindrical battery cells 120 of the first set are electrically connected in parallel via the first negative busbar plates 130 and the first positive busbar plate 140. Correspondingly, all of the cylindrical battery cells 120' of the second set are electrically connected in parallel via the second negative busbar plates 130' and the second positive busbar plate 140'.

Typically, the second sub-portion 110b of the battery cell arrangement 110' comprises a first coupling side arranged opposite the second coupling side 141', wherein the first coupling side of the second sub-portion 110b is corresponding in structure and function to the first coupling side 141 of the first sub-portion 110a. Hereby, another sub-portion corresponding to the first and second sub-portions 1 10a, 110b of the battery cell arrangement 110' may be coupled to the second sub-portion 110b.

The battery cell arrangement as disclosed herein may also be used in a stationary unit, such as a building and/or any stationary machinery.

Example 1. A battery cell arrangement comprising: a plurality of cylindrical battery cells, each one of the cylindrical battery cells having a top surface including a centrally arranged positive terminal and a negative terminal circumferentially arranged around the positive terminal; a negative busbar plate arranged supported on the top surfaces of the plurality of cylindrical battery cells, and a positive busbar plate arranged electrically isolated from, and supported on, the negative busbar plate, the positive busbar plate comprising a plurality of positive busbar terminals aligned with the positive terminals of the plurality of cylindrical battery cells, and the negative busbar plate comprising a plurality of first openings aligned with the plurality of positive busbar terminals; wherein the positive busbar plate comprises a plurality of second openings aligned with the negative terminals of the plurality of cylindrical battery cells, and wherein each one of the positive busbar terminals is arranged in contact with a corresponding positive terminal of the plurality of cylindrical battery cells, and each one of the negative terminal of the plurality of cylindrical battery cells is arranged in contact with the negative busbar plate at the associated second opening of the positive busbar plate.

Example 2. The battery cell arrangement of example 1, wherein each one of the positive busbar terminal of the positive busbar plate is formed like an impression in the positive busbar plate.

Example 3. The battery cell arrangement of example 2, wherein each one of the impressions is extending into the corresponding first opening of the negative busbar plate.

Example 4. The battery cell arrangement of any of examples 2-3, wherein each one of the impressions is forming a bridge between opposite sides of the corresponding positive busbar terminal.

Example 5. The battery cell arrangement of example 4, wherein the formed bridge of each impression comprises a lateral side adjacent a void.

Example 6. The battery cell arrangement of any of examples 1-5, wherein the negative busbar plate is supported on the negative terminal of the cylindrical battery cells.

Example 7. The battery cell arrangement of any of examples 1-6, wherein each one of the second openings in the positive busbar plate is formed as an annulus sector.

Example 8. The battery cell arrangement of example 7, wherein the annulus sector of each second opening is defined by an angle of between 30° and 180°.

Example 9. The battery cell arrangement of any of examples 1-8, wherein the plurality of cylindrical battery cells are electrically connected in parallel via the negative busbar plate and the positive busbar plate.

Example 10. The battery cell arrangement of any of examples 1-9, wherein the plurality of cylindrical battery cells is a first set of cylindrical battery cells, the negative busbar plate is a first negative busbar plate and the positive busbar plate is a first positive busbar plate, wherein the battery cell arrangement comprises a second set of cylindrical battery cells, each one of the cylindrical battery cells in the second set having a top surface including a centrally arranged positive terminal and a negative terminal circumferentially arranged around the positive terminal, a second negative busbar plate arranged supported on the top surface of the second set of cylindrical battery cells, and a second positive busbar plate arranged electrically isolated from, and supported on, the second negative busbar plate, and wherein the first positive busbar plate comprises a first lateral coupling side and the second positive busbar plate comprises a second lateral coupling side arranged to couple to the first lateral coupling side such that the first and second positive busbar plates are arranged side-by-side.

Example 11. The battery cell arrangement of example 10, wherein second positive busbar plate is electrically connected to the first negative busbar plate such that the first set of cylindrical battery cells is electrically connected in series with the second set of cylindrical battery cells.

Example 12. The battery cell arrangement of any of examples 10-11, wherein the second positive busbar plate comprises a plurality of interconnections arranged in the second lateral coupling side for electrically connecting the first negative busbar plate with the second positive busbar plate.

Example 13. The battery cell arrangement of any of examples 10-12, wherein the first lateral coupling side of the first positive busbar plate comprises a plurality of indentations, and the second lateral coupling side of the second positive busbar plate comprises a plurality of protrusions sized and dimensioned to match the indentations.

Example 14. The battery cell arrangement of examples 12-13, wherein the second lateral coupling side of the second positive busbar plate comprises a plurality of second interconnecting sections arranged in between the plurality of protrusions, wherein the second interconnecting sections comprises the interconnections.

Example 15. The battery cell arrangement of example 14, wherein the first lateral coupling side of the first positive busbar plate comprises a plurality of first interconnecting sections arranged in between the plurality of indentations, wherein the first negative busbar plate is overlapping the second positive busbar plate at the first interconnecting sections.

Example 16. The battery cell arrangement of any of examples 13-15, wherein each one of the protrusions of the second lateral coupling side is arranged adjacent a corresponding positive busbar terminal of the second positive busbar plate.

Example 17. The battery cell arrangement of any of examples 1-16, wherein the plurality of cylindrical battery cells extends axially from a bottom surface to the top surface, and wherein the plurality of first openings are axially aligned with the plurality of positive busbar terminals, and wherein plurality of second openings are axially aligned with the negative terminals of the plurality of cylindrical battery cells.

Example 18. The battery cell arrangement of any of examples 1-17, wherein the plurality of cylindrical battery cells is arranged in a matrix of rows and columns.

Example 19. A vehicle comprising the battery cell arrangement of any of examples 1-18.

Example 20. A vehicle of example 19 comprising an electric traction machine powered by the battery cell arrangement.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery cell arrangement (110) comprising:
- a plurality of cylindrical battery cells (120, 122), each one of the cylindrical battery cells (120, 122) having a top surface (122a) including a centrally arranged positive terminal (124) and a negative terminal (126) circumferentially arranged around the positive terminal (124),
- a negative busbar plate (130) arranged supported on the top surfaces (122a) of the plurality of cylindrical battery cells (120, 122), and a positive busbar plate (140) arranged electrically isolated from, and supported on, the negative busbar plate (130), the positive busbar plate (140) comprising a plurality of positive busbar terminals (144, 144a) aligned with the positive terminals (124) of the plurality of cylindrical battery cells (120), and the negative busbar plate (130) comprising a plurality of first openings (132, 132a) aligned with the plurality of positive busbar terminals (144, 144a),
wherein the positive busbar plate (140) comprises a plurality of second openings (146, 146a) aligned with the negative terminals (126) of the plurality of cylindrical battery cells (120), and wherein each one of the positive busbar terminals (144, 144a) is arranged in contact with a corresponding positive terminal (124) of the plurality of cylindrical battery cells (120, 122), and each one of the negative terminal (126) of the plurality of cylindrical battery cells (120, 122) is arranged in contact with the negative busbar plate (130) at the associated second opening (146, 146a) of the positive busbar plate (140).

2. The battery cell arrangement (110) of claim 1, wherein each one of the positive busbar terminal (144, 144a) of the positive busbar plate is formed like an impression (145a) in the positive busbar plate (140).

3. The battery cell arrangement (110) of claim 2, wherein each one of the impressions (145a) is extending into the corresponding first opening (132, 132a) of the negative busbar plate (130).

4. The battery cell arrangement (110) of any of claims 2-3, wherein each one of the impressions (145a) is forming a bridge (145b) between opposite sides of the corresponding positive busbar terminal (144, 144a).

5. The battery cell arrangement (110) of claim 4, wherein the formed bridge (145b) of each impression (145a) comprises a lateral side (145c, 145d) adjacent a void (147).

6. The battery cell arrangement (110) of any of claims 1-5, wherein the negative busbar plate (130) is supported on the negative terminal (126) of the cylindrical battery cells (120, 122).

7. The battery cell arrangement (110) of any of claims 1-6, wherein each one of the second openings (146, 146a) in the positive busbar plate is formed as an annulus sector.

8. The battery cell arrangement (110) of any of claims 1-7, wherein the plurality of cylindrical battery cells (120, 122) are electrically connected in parallel via the negative busbar plate (130) and the positive busbar plate (140).

9. The battery cell arrangement (110) of any of claims 1-8, wherein the plurality of cylindrical battery cells (120, 122a) is a first set of cylindrical battery cells, the negative busbar plate (130) is a first negative busbar plate and the positive busbar plate (140) is a first positive busbar plate, wherein the battery cell arrangement (110) comprises a second set of cylindrical battery cells (120', 122), each one of the cylindrical battery cells (122) in the second set (122') having a top surface (122a) including a centrally arranged positive terminal (124) and a negative terminal (126) circumferentially arranged around the positive terminal (124), a second negative busbar plate (130') arranged supported on the top surface (122a) of the second set of cylindrical battery cells (120', 122), and a second positive busbar plate (140') arranged electrically isolated from, and supported on, the second negative busbar plate (130'), and wherein the first positive busbar plate (140) comprises a first lateral coupling side (141) and the second positive busbar plate (140') comprises a second lateral coupling side (141') arranged to couple to the first lateral coupling side (141) such that the first and second positive busbar plates (140, 140') are arranged side-by-side.

10. The battery cell arrangement (110) of claim 9, wherein second positive busbar plate (140') is electrically connected to the first negative busbar plate (130) such that the first set (120) of cylindrical battery cells is electrically connected in series with the second set (120') of cylindrical battery cells.

11. The battery cell arrangement (110) of any of claims 9-10, wherein the second positive busbar plate (140') comprises a plurality of interconnections (142') arranged in the second lateral coupling side (141') for electrically connecting the first negative busbar plate (130) with the second positive busbar plate (140').

12. The battery cell arrangement (110) of any of claims 9-11, wherein the first lateral coupling side (141) of the first positive busbar plate (140) comprises a plurality of indentations (143), and the second lateral coupling side (141') of the second positive busbar plate (140') comprises a plurality of protrusions (145') sized and dimensioned to match the indentations (143).

13. The battery cell arrangement (110) of claims 11-12, wherein the second lateral coupling side (141') of the second positive busbar plate (140') comprises a plurality of second interconnecting sections (147') arranged in between the plurality of protrusions (145'), wherein the second interconnecting sections (147') comprises the interconnections (142').

14. The battery cell arrangement (110) of any of claims 1-13, wherein the plurality of cylindrical battery cells (120, 122) extends axially from a bottom surface (122b) to the top surface (122a), and wherein the plurality of first openings (132) are axially aligned with the plurality of positive busbar terminals (122a), and wherein plurality of second openings (146, 146a) are axially aligned with the negative terminals (126) of the plurality of cylindrical battery cells (120, 122).

15. A vehicle (1) comprising the battery cell arrangement (110) of any of claims 1-14.
